# FASCICULE DE BREVET EUROPEEN

(11) **EP 1 526 403 B1**
(45) Date de publication et mention de la délivrance du brevet: **17.09.2014**
(21) Numéro de dépôt: 04292514.9
(22) Date de dépôt: 22.10.2004
(51) Int. Cl.: G02F 1/133, G02F 1/13

(54) **Dispositif afficheur notamment afficheur à cristaux liquides pour véhicules automobiles protegé contre les décharges électrostatiques**
Gegen elektrostatische Entladungen geschützte Anzeigevorrichtung, insbesondere Flüssigkristallanzeige
Against electrical discharges protected display device, in particular liquid-crystal display device for cars

(30) Priorité: 22.10.2003 FR 0312361
(43) Date de publication de la demande: 27.04.2005
(73) Titulaire: MAGNETI MARELLI FRANCE, 78190 Trappes (FR)
(72) Inventeur: Carle, Jean-Michel, 86530 Availles en Chatellerault (FR); De Gea, Philippe, 86440 Migne-Auxances (FR)
(74) Mandataire: Regimbeau

(56) Documents cités:
- EP-A- 0 502 364
- DE-A- 19 848 010
- US-A- 4 773 735
- US-A1- 2002 008 824

## Description

La présente invention concerne le domaine des afficheurs, notamment le domaine des afficheurs à cristaux liquides.

La présente invention concerne en particulier, mais non exclusivement, les afficheurs utilisés sur les tableaux de bord de véhicules automobiles.

De nombreux afficheurs ont déjà été proposés.

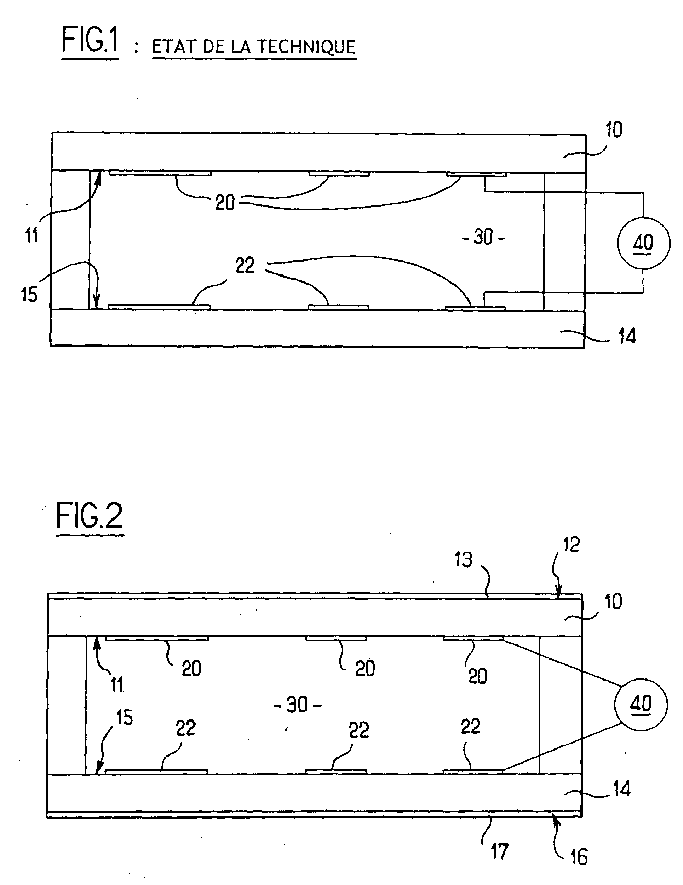

On a en particulier déjà proposé de nombreux afficheurs à base de cristaux liquides. Typiquement, comme on l'a illustré schématiquement sur la figure 1, un afficheur à cristaux liquides comprend deux plaques en verre 10, 14, revêtues localement sur leur surface interne 11, 15, de pistes 20, 22 en matériau électriquement conducteur, d'un matériau cristal liquide 30 confiné entre les deux plaques 10, 14 et une alimentation électrique 40 apte à appliquer une tension contrôlée entre certaines choisies des pistes 20, 22 pour modifier localement l'orientation de molécules de cristal liquide grâce à l'anisotropie électrique de celles-ci et modifier ainsi la réponse optique de l'afficheur.

Les afficheurs connus donnent globalement satisfaction.

Cependant les inventeurs ont constaté que dans certaines circonstances, les afficheurs connus sont très sensibles aux agressions électrostatiques extérieures.

Le document US-4773735 décrit un afficheur comprenant sur sa face arrière une couche d'oxyde métallique utilisée comme moyen de chauffage.

Les documents EP-0502364, DE-19848010 et US 2002/0008824 décrivent l'utilisation d'une couche d'oxyde métallique électriquement conductrice comme protection face à des décharges électrostatiques.

Cependant aucune combinaison des moyens précités n'a été jusqu'ici proposée.

La présente invention a maintenant pour but de proposer un dispositif afficheur présentant des propriétés supérieures à celles des dispositifs antérieurs connus.

La présente invention a en particulier pour but de proposer un dispositif présentant une bonne résistance à l'égard de possibles décharges électrostatiques environnantes.

Les buts précités sont atteints dans le cadre de la présente invention grâce à un dispositif afficheur tel que défini en revendication 1 annexée.

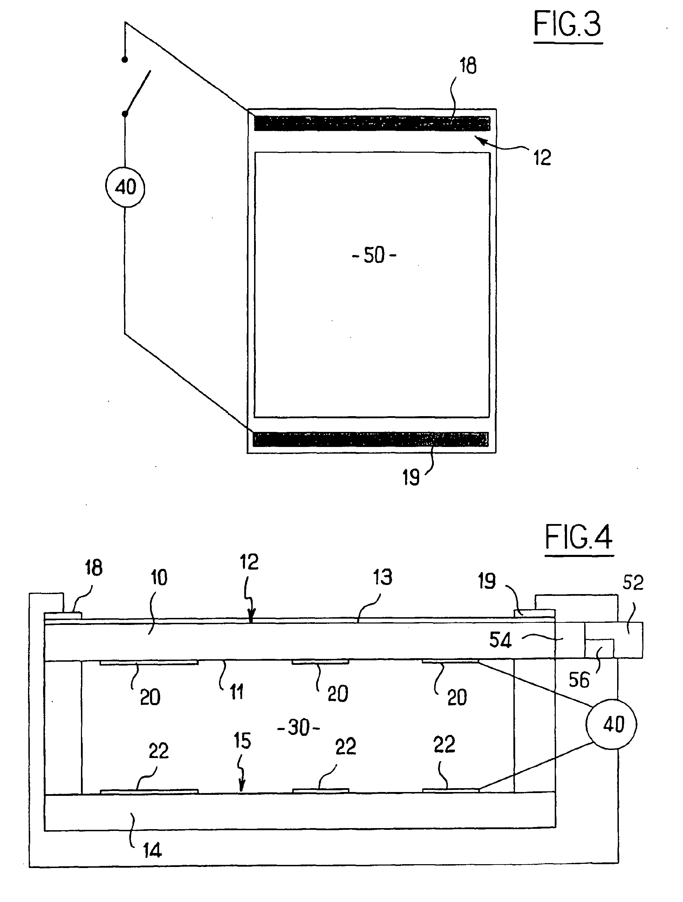

D'autres caractéristiques, buts et avantages de la présente invention apparaîtront à la lecture de la description détaillée qui va suivre, et en regard des dessins annexés, donnés à titre d'exemples non limitatifs et sur lesquels :
. la figure 1 précédemment décrite représente une vue en coupe schématique d'un afficheur à cristaux liquides conforme à l'état de la technique,
. la figure 2 représente une vue similaire d'un afficheur conforme à la présente invention,
. la figure 3 représente une vue de la face avant d'un afficheur à cristaux liquides conforme à la présente invention, et plus précisément des moyens de liaison électrique d'une couche d'oxyde d'indium et d'étain avec des moyens d'alimentation électrique pour assurer une fonction de chauffage, et
. la figure 4 représente une vue en coupe schématique d'un mode de réalisation préférentiel d'afficheur conforme à la présente invention.

On aperçoit sur la figure 2 annexée un dispositif afficheur conforme à la présente invention, qui comprend sur l'une au moins de ses surfaces externes 12, 16, une couche transparente électriquement conductrice 13, 17. Cette couche 13, 17 est reliée à la masse électrique du produit intégrant l'afficheur, par exemple le tableau de bord d'un véhicule automobile, en dehors des périodes de chauffage requises. La liaison de cette couche 13, 17 à la masse électrique peut être incluse dans le dispositif de connexion électrique de l'afficheur.

Selon le mode de réalisation schématisé sur la figure 2, il est ainsi prévu une couche 13, 17 sur chacune des deux faces externes 12, 16 de l'afficheur.

Cependant, l'on peut prévoir une telle couche 13 ou 17 sur l'une seulement des deux faces externes 12, 16 de l'afficheur. Il s'agit dans ce cas, de celle des deux faces externes la plus exposée aux agressions ou décharges électrostatiques externes, c'est-à-dire la face avant de l'afficheur dirigée vers l'observateur.

De préférence chaque couche 13, 17 recouvre l'intégralité des faces externes 12, 16. Cependant en variante on peut prévoir des couches 13, 17 qui ne recouvre qu'une partie des faces externes 12, 16.

De préférence dans le cadre de la présente invention, la couche externe 13, 17 est formée d'une couche mince d'oxyde métallique, par exemple une couche d'Oxyde d'indium et d'Etain. Cette couche 13 et/ou 17 est de préférence formée de manière identique à la couche d'ITO 20, 22, disposée sur la surface interne des plaques 10, 14.

Par ailleurs, et sans que l'invention soit strictement limitée à cette application particulière, la présente invention s'applique en particulier aux afficheurs à cristaux liquides comprenant un matériau cristal liquide 30 disposé entre deux plaques 10, 14 munies de pistes électriquement conductrices 20, 22 sur leur surface interne 11, 15 et associé à une alimentation électrique 40.

Bien entendu la présente invention n'est pas limitée au mode de réalisation particulier qui vient d'être décrit, mais s'étend à toutes variantes conformes à son esprit.

La présente invention offre de nombreux avantages par rapport à l'état de la technique :
. elle protège l'afficheur de la destruction par ESD,
. elle protège l'afficheur contre des dégradations d'affichage temporaires suite à des décharges électrostatiques,
. elle protège l'électronique de commande de l'afficheur contre les défaillances et destructions par ESD,
. elle permet d'éviter l'utilisation d'autres protections mécaniques telles que des blindages métalliques périphériques à l'afficheur ou d'une vitre montée devant l'afficheur,
. elle ne requiert aucune étape additionnelle dans le processus de fabrication de l'afficheur ou de son environnement,
. elle minimise le rayonnement électromagnétique de l'afficheur.

Par ailleurs dans le cadre de la présente invention, la couche conductrice 13, 17 est utilisée comme système de chauffage. En effet lorsqu'une tension est appliquée entre deux zones opposées de cette couche celle-ci génére des calories par effet Joule.

En pratique, la couche 13 et/ou 17 peut être placée sur une plaque de verre 10, 14 formant classiquement un afficheur ou sur une plaque de verre rajoutée contre les plaques 10, 14 précitées.

La plaque de verre qui porte la couche 13 et/ou 17 peut par exemple être munie sur sa surface externe d'une couche d'ITO assurant la fonction de protection contre les décharges électrostatiques et la fonction de chauffage, ainsi que sur la même surface externe d'une couche mince anti-reflets. La composition d'une telle couche anti-reflets est bien connue de l'homme de l'art. Elle ne sera donc pas décrite par la suite.

En variante, la plaque de verre qui porte la couche 13 et/ou 17 peut être munie sur sa surface externe d'une couche d'ITO assurant la fonction de protection contre les décharges électrostatiques et la fonction de chauffage, tandis qu'une couche mince anti-reflets est prévue sur la surface interne de la plaque précitée.

Pour permettre un réchauffage optimum de l'afficheur, la connectique est de préférence prévue pour exploiter une couche d'ITO couvrant la quasi totalité de l'afficheur. En d'autres termes, de préférence, la connectique est formée de deux bandes rectilignes parallèles qui couvrent la quasi totalité de deux des bords opposés de l'afficheur. Il s'agit de préférence des petits côtés de l'afficheur comme on le voit sur la figure 3 sur laquelle on a référencé 18 et 19 les deux pistes de connexion sur la couche d'ITO et sur laquelle on a référencé 50 la zone visible de l'afficheur. Bien évidemment, les pistes 18 et 19 sont de préférence prévues en dehors de la zone visible 50. Elles sont reliées à une alimentation électrique par l'intermédiaire d'un interrupteur commandé ou tout moyen équivalent.

Plus précisément encore, les pistes 18 et 19 peuvent être reliées à la batterie du véhicule. Le cas échéant, un module de commande peut être intercalé entre la batterie du véhicule et l'afficheur pour piloter la puissance fournie à la couche de réchauffage 13 ou 17, par exemple en modulant des largeurs d'impulsions de tension constante formée à partir de la tension de la batterie. Ainsi, la puissance de chauffage peut être modulée de 0 à 100% de la puissance maximale. Le module précité peut être lui même commandé par un capteur de température. A cet effet, le module de commande peut comprendre une table définissant la puissance du réchauffeur recherché et par conséquent la modulation de largeur d'impulsions nécessaire en fonction de la température mesurée.

On a représenté sur la figure 4 annexée, un mode de réalisation préférentiel de la présente invention selon lequel l'afficheur comporte sur sa face avant et uniquement sur celle-ci, c'est-à-dire sur la face externe 12 de la plaque de verre 10, une couche d'ITO 13, deux bandes électriquement conductrices 18, 19 rectilignes placées sur cette dernière au niveau des petits côtés de l'afficheur, sur l'extérieur de la zone visible 50, les deux bandes 18, 19 étant susceptibles d'être reliées aux bornes de la batterie 40 d'un véhicule par l'intermédiaire d'un module de commande 52 associé à un capteur de température 54 et comportant une table 56 conçue pour piloter en conséquence la largeur des impulsions électriques appliquées à la couche d'ITO 13 pour obtenir la puissance de chauffage recherchée.

## Revendications

1. Dispositif afficheur comprenant une couche électriquement conductrice (13, 17) sur l'une au moins de ses surfaces externes et qui constitue un système de chauffage, **caractérisé en ce que** ladite couche électriquement conductrice (13,17) est transparente et déposée sur la face avant de l'afficheur dirigée vers l'observateur et que le dispositif afficheur comprend en outre un module de commande associé à un capteur de température et à un interrupteur commandé adapté pour sélectivement relier ladite couche électriquement conductrice (13,17) à une alimentation électrique (40) pour former un système de chauffage ou à une masse pour former une couche de protection contre les agressions électriques extérieures.

2. Dispositif selon la revendication 1, **caractérisé par le fait que** la couche électriquement conductrice (13, 17) déposée sur la surface externe de l'afficheur est une couche d'oxyde métallique.

3. Dispositif selon l'une des revendications 1 ou 2, **caractérisé par le fait que** la couche électriquement conductrice (13, 17) déposée sur la surface externe de l'afficheur est une couche d'Oxyde d'Indium et d'Etain.

4. Dispositif selon l'une des revendications 1 à 3, **caractérisé par le fait qu'**il forme un afficheur à cristaux liquides.

5. Dispositif selon l'une des revendications 1 à 4, **caractérisé par le fait que** chaque couche (13, 17) transparente électriquement conductrice recouvre l'intégralité d'une face externe (12, 16) de l'afficheur.

6. Dispositif selon l'une des revendications 1 à 5, **caractérisé par le fait que** le module de commande (52) est adapté pour moduler la tension électrique appliquée à ladite couche à partir de la batterie de véhicule.

7. Dispositif selon l'une des revendications 1 à 6, **caractérisé par le fait que** le module de commande (52) comporte une table définissant les consignes de modulation de l'alimentation appliquée à ladite couche en fonction de la température mesurée pour obtenir la puissance de chauffage recherchée.

8. Dispositif selon l'une des revendications 1 à 7, **caractérisé par le fait qu'**il comprend deux bandes de connexion rectilignes parallèles (18, 19) adaptées pour relier ladite couche à une alimentation électrique.

9. Dispositif selon la revendication 8, **caractérisé par le fait que** les deux bandes de connexion rectilignes parallèles (18, 19) sont prévues sur les petites côtés de l'afficheur,

10. Dispositif selon l'une des revendications 1 à 9, **caractérisé par le fait que** la plaque qui porte ladite couche (13) est traitée anti-reflets.

11. Utilisation du disposifif afficheur conforme à l'une des revendications 1 10, dans un tableau de bord de véhicule automobile.

## Patentansprüche

1. Anzeigevorrichtung, die an mindestens einer ihrer äußeren Oberflächen eine elektrisch leitende Schicht (13,17) aufweist, die ein Heizsystem bildet, **dadurch gekennzeichnet, dass** die elektrisch leitende Schicht (13,17) transparent ist und an der zum Beobachter gerichteten Vorderfläche der Anzeigevorrichtung angeordnet ist, und dadurch, dass die Anzeigevorrichtung außerdem ein Steuermodul aufweist, das mit einem Temperatursensor und einem gesteuerten Schalter gekoppelt ist, um die elektrisch leitende Schicht (13,17) selektiv mit einer elektrischen Versorgung (40) zu verbinden, um ein Heizsystem zu bilden, oder mit Masse zu verbinden, um eine Schutzschicht gegen äußere elektrische Einwirkungen zu bilden.

2. Vorrichtung nach Anspruch 1, **dadurch gekennzeichnet, dass** die an der äußeren Oberfläche der Anzeigevorrichtung angeordnete elektrisch leitende Schicht (13,17) eine Metalloxid-Schicht ist.

3. Vorrichtung nach einem der Ansprüche 1 oder 2, **dadurch gekennzeichnet, dass** die an der äußeren Oberfläche der Anzeigevorrichtung angeordnete elektrisch leitende Schicht (13,17) eine Indium/Zinn-Oxid-Schicht ist.

4. Vorrichtung nach einem der Ansprüche 1 bis 3, **dadurch gekennzeichnet, dass** sie eine Flüssigkristall-Anzeigevorrichtung bildet.

5. Vorrichtung nach einem der Ansprüche 1 bis 4, **dadurch gekennzeichnet, dass** jede transparente elektrisch leitende Schicht (13,17) die Gesamtheit einer Außenfläche (12,16) der Anzeigevorrichtung bedeckt.

6. Vorrichtung nach einem der Ansprüche 1 bis 5, **dadurch gekennzeichnet, dass** das Steuermodul (52) konfiguriert ist, um die von der Fahrzeugbatterie an die Schicht angelegte elektrische Spannung zu modulieren.

7. Vorrichtung nach einem der Ansprüche 1 bis 6, **dadurch gekennzeichnet, dass** das Steuermodul (52) eine Tabelle aufweist, die Steuerungswerte für die Modulation der an der Schicht anliegenden Versorgung in Abhängigkeit von der gemessenen Temperatur definiert, die anzuwenden sind, um die gewünschte Heizleistung zu erzielen.

8. Vorrichtung nach einem der Ansprüche 1 bis 7, **dadurch gekennzeichnet, dass** sie zwei parallele geradlinige Verbindungsbänder (18,19) aufweist, um die Schicht mit einer elektrischen Versorgung zu verbinden.

9. Vorrichtung nach Anspruch 8, **dadurch gekennzeichnet, dass** die zwei parallelen gradlinigen Verbindungsbänder (18,19) an den kurzen Seiten der Anzeigevorrichtung vorgesehen sind.

10. Vorrichtung nach einem der Ansprüche 1 bis 9, **dadurch gekennzeichnet, dass** die Platte, die die Schicht (13) trägt, entspiegelt ist.

11. Verwendung der Anzeigevorrichtung nach einem der Ansprüche 1 bis 10 in einer Instrumententafel eines Automobilfahrzeugs.

## Claims

1. Display device comprising an electrically conductive layer (13, 17) on at least one of the external surfaces thereof and forming a heating system, **characterised in that** said electrically conductive layer (13, 17) is transparent and deposited on the front face of the display facing the viewer and that the display device further comprises a control module associated with a temperature sensor and a controlled switch suitable for selectively connecting said electrically conductive layer (13, 17) to an electrical power supply (40) to form a heating system or to an earth to form a protective layer against external electrical attacks.

2. Device according to claim 1, **characterised in that** the electrically conductive layer (13, 17) deposited on the external surface of the display is a metal oxide layer.

3. Device according to any of claims 1 or 2, **characterised in that** the electrically conductive layer (13, 17) deposited on the external surface of the display is an Indium and Tin oxide layer.

4. Device according to any of claims 1 to 3, **characterised in that** it forms a liquid-crystal display.

5. Device according to any of claims 1 to 4, **characterised in that** each electrically conductive transparent layer (13, 17) covers an entire external face (12, 16) of the display.

6. Device according to any of claims 1 to 5, **characterised in that** the control module (52) is suitable for modulating the electrical voltage applied to said layer using the vehicle battery.

7. Device according to any of claims 1 to 6, **characterised in that** the control module (52) comprises an array defining the modulation set-points of the power supply applied to said layer as a function of the temperature measured to obtain the sought heating power.

8. Device according to any of claims 1 to 7, **characterised in that** it comprises two parallel rectilinear connection strips (18, 19) suitable for connecting said layer to an electrical power supply.

9. Device according to claim 8, **characterised in that** the two parallel rectilinear connection strips (18, 19) are provided on the small sides of the display.

10. Device according to any of claims 1 to 9, **characterised in that** the panel bearing said layer (13) has an anti-reflective treatment.

11. Use of the display device according to any of claims 1 to 10, in a motor vehicle instrument panel.
